# EUROPEAN PATENT SPECIFICATION

(11) **EP 1 924 789 B1**
(45) Date of publication and mention of the grant of the patent: **06.11.2013**
(21) Application number: 06783996.9
(22) Date of filing: 11.09.2006
(51) Int. Cl.: F16H 61/30

(54) **CABLE VALVE**
SEILVENTIL
VALVE DE CABLE

(30) Priority: 13.09.2005 SE 0502058
(43) Date of publication of application: 28.05.2008
(73) Proprietor: Kongsberg Automotive AS, 3602 Kongsberg (NO)
(72) Inventor: BJØRKGÅRD, Sven, N-3610 Kongsberg (NO)
(74) Representative: UEXKÜLL & STOLBERG
(86) International application number: PCT/NO2006/000313
(87) International publication number: WO 2007/032685

(56) References cited:
- EP-A- 0 692 658
- US-A- 4 742 724

## Description

The invention concerns a system for the shifting of gear ratio in a gear box of a vehicle and a method for operating a valve included in such a system.

In heavy vehicles having manual gearshift systems, the shifting operating of the gear shift lever as required by the driver may be transferred via at least a cable or a wire to the shifting mechanism gear of the gear box. In some system the shifting of gear is accomplished by the shifting mechanism being assisted by a power contribution from an assisting mechanism, for instance a servo mechanism using air as an operating medium. The valve of the servo in accordance with prior art may be controlled by a separate lever, utilizing the force as applied by the driver onto the gear shift lever.

US 4742724 discloses such as a system wherein the assisting mechanism provides power to the shifting mechanism when shifting operation is performed by the gear shift lever. The output of the assisting mechanism is controlled by the force transferred from the gear shift lever and applied onto parts of the shifting mechanism of the gearbox.

EP 0 692 658 A discloses the preambles of claims 1 and 18.

This prior art solution has the disadvantage of slack in the system caused by the use of the separate lever. Further, the transmission conditions are often set up so that the percepted slack in the shift lever is greater than the actual slack in the valve, e.g. a 1 mm movement of the valve requires a 5 mm shift lever movement.

The object of the invention is to provide a solution for controlling the assisting mechanism which is cheap, simplified and involves a reduced number of parts compared to prior art. A further object of the invention is to reduce the above mentioned slack in the system.

The object of the invention is achieved by the solution as defined in the independent claims, wherein further embodiments of the invention are provided in the dependent claims.

The system in accordance with the invention comprises a gear shift lever which is moveable in at least one shift gate wherein one or plural positions each represent a specific gear ratio or a neutral mode. Preferably the gear shift lever is movable in a gear pattern constituted by plural shift gates, but may also be applicable to a gear pattern constituted by a simple shift gate. The shift gate may be provided in various ways. When the gear pattern comprises shift gates, each shift gate may be arranged with two end positions each representing a different gear ratio and a position in between representing a neutral mode. One of the shift gates may comprise a position representing a neutral mode and one end position representing a gear ratio. The gear shift lever is movable within the shift gate carrying out a shifting operation and between the neutral modes of shift gates performing a selecting operation choosing a specific shift gate. The information of the chosen specific gear ratio as requested by the gear shift lever is transferred to a shifting mechanism of the gear box by at least one cable, preferably the information is transferred by the movement of the cable. The cable is arranged with a cable cover fitted loosely around the cable and the operation of the gear shift lever causes the cable to move in one direction and the cover to move in opposite directions. Further, an assistance mechanism is included in the system to provide a power contribution for the shifting mechanism to carry out the shifting operation. The power assistance mechanism is controlled by a valve being operated by the movement of the cable cover.

When a cable for carrying out shifting is operated by the gear shift lever, movement of the cable is induced in one direction. Due to reactive forces appearing when operating the gear shift lever a movement of the cable cover appears in a direction opposite to the direction of the shift cable. In prior art system this movement is absorbed by a rubber bushing, situated as a connection between the cable cover and the gear box. The rubber bushing provides an elasticity to the system. It is desirable also to arrange the inventive system so that a corresponding elasticity appears. This elasticity is to be used to controlling the valve.

In the inventive solution the system is not aiming at eliminating the effect of the movement by absorbing the movement of the cable cover. On the contrary the movements of the cable cover are employed to operate the valve controlling the assisting mechanism. By this arrangement a cheap solution is provided excluding the separate lever. By the direct operation of the valve a minimum slack is produced since existing elasticity is utilized and redundant slack is removed. A disadvantage is the movement of the cable cover (corresponding to valve movement, typically ±1mm). However, a protective tubing can be applied on the outer surface of the cover to prevent the movement of the cable cover to effect surrounding components.

The valve controlling the assisting mechanism may be located at the end of the cable cover. The valve may be located in, on or close to the gear box. The valve may constitute a connecting unit for connecting the cable cover to the gear box or the valve may have a connection to the cable cover. The valve may be a poppet valve or any other kind of valve capable of controlling the assisting mechanism.

A cylinder is included in the power assistance mechanism. The cylinder constitutes a cylinder chamber arranged with a movable piston provided with a piston rod, which piston divides the cylinder chamber into first and second cylinder chamber. The output of the cylinder as contributed by the piston rod depends on the valve controlling input fed into the first or second chamber.

The operating mode of the valve is controlled by the movements or non movement of the cable cover. The cable cover is movable in two opposite directions. When the cable cover is moved in a first direction due to the shifting of gear ratio as requested by the gear shift lever moving in a first direction in the shift gate, the valve is brought into a first operation mode. Likewise, when moving the gear shift lever in the opposite direction requesting another gear ratio in the shift gate, the cable cover is caused to move in a second direction, bringing the valve into a second operation mode.

The valve may be provided with at least a first inlet and preferably also a second inlet communicating with a fluid source. The valve is arranged for establishing a communication between the first inlet and a first outlet, wherein the first outlet is able to communicate with first cylinder chamber of the cylinder. Further, the valve may be provided for establishing communication between the second inlet and a preferable second outlet, wherein the second outlet is able to communicate with second cylinder chamber of the cylinder. The valve may be provided with some kind of arrangements for the venting of first and second cylinder chamber and may for instance be provided with an exhaust outlet. Even if the valve in a preferred embodiment is provided with first and second inlets and first and second outlets, the skilled person will realize that a valve provided with only first inlet and first outlet may very well work in accordance with the object of the invention. Further, the valve may also function provided with more than two inlets and two outlets.

In accordance with an embodiment of the invention the valve is arranged with a valve controlling unit controlling the operational modes of the valve. Preferably the valve controlling unit moves in accordance with the cable cover. The valve controlling unit may constitute a part of the cable cover or may be provided as a separate structure connected to the cable cover.

The valve controlling unit may be arranged movable relative to the inlets and outlets and controls the operating modes of the valve. The movements of the cable cover causes the valve controlling unit to determine the specific operating mode. The positions of the valve controlling unit bring the valve into different modes. The valve controlling unit may be moved in a first direction to cause the first inlet to open, or the valve controlling unit may be moved in a second direction causing the second inlet to open. Or the valve controlling unit may be moved in a first or second direction into a middle position wherein both inlets are closed.

In a first operating mode of the valve, communication into the first chamber is provided through the first inlet and first outlet. In a second operating mode of the valve communication into the second chamber is provided through the second inlet and second outlet. In a third operating mode of the valve communication is provided between first and second chamber and the exhaust outlet.

In an embodiment of invention the valve is provided with a first movable valve body to close or open the first inlet and a second movable valve body to close or open the second inlet. The movements of first and second movable valve body are preferably controlled by the valve controlling unit.

Further the valve controlling unit may be movable to close or open the exhaust outlet. Preferably the valve controlling unit is provided with a passage.

When in neutral mode the valve controlling unit preferably has a centralized position in the axial direction of the valve. The valve may be provided with at least a spring arranged in the interior of the valve supporting and establishing contact between the controlling unit and the end portions of the valve. One spring may be arranged between the end portions of the valve and the valve controlling unit on each side of the valve controlling unit. Alternatively one common spring may be provided extending from one end portion of the valve to the other, the valve controlling unit being centralized in the middle of the spring. Each valve body may be supported by at least one spring. In a neutral mode of the valve these springs are not compressed. Moving the valve controlling unit in accordance with the cable cover to open first or second inlets, causes compression of one of the springs belonging to the specific valve body.

The invention also includes a method for operating a valve which is included in a system in accordance with the invention. The method comprises plural steps; wherein the first step constitutes moving the gear shift lever requesting another gear ratio, thereby causing a cable to move in a first direction transferring the request for another gear ratio to a shifting mechanism of the gear box. By performing this step a cable cover which is fitted loosely around the cable is caused to move in a direction opposite to the moving direction of the cable. The movement of the cable cover is utilized for operating a valve controlling the power assistance mechanism.

In accordance with one embodiment of the invention a valve controlling unit fixed to the cable cover transfers the movements of the cable cover to the movable parts of the valve.

In accordance with a further embodiment of the invention,
the method comprises the steps of moving the gear shift lever in a first direction in a shift gate into a position representing a specific gear ratio, causing the cable cover and the valve controlling unit to move in the same direction. Thereby closing the exhaust outlet and opening the first inlet to provide for fluid to enter the first cylinder chamber thereby providing power assistance to carry out the shifting operation of the shifting mechanism. Moving the gear shift lever in a second direction in the shift gate into a position representing a specific gear ratio, the cable cover and the valve controlling unit is caused to move in the same direction.

Thereby closing the exhaust outlet and opening the second inlet to provide for fluid to enter the second cylinder chamber thereby providing power assistance to carry out the shifting operation of the shifting mechanism.

The valve controlling unit may cause a first movable valve body to move to open the first inlet when the cable cover moves in the first direction. Further, the valve controlling unit valve may cause a second movable valve body to move to open the second inlet when the cable cover moves in the second direction.

When moving the cable cover in first direction the spring arranged between the valve control unit and the end portions of the valve and the spring supporting the first valve body is compressed. When moving the cable cover in second direction the spring arranged between the valve control unit and the end portions of the valve and a spring supporting the second valve body, is compressed.

The method may comprise further steps of moving the gear shift lever into a position representing a neutral mode, thereby returning the valve controlling unit into a position closing the inlets and opening the exhaust outlet. The compressed spring return to uncompressed condition when returning to neutral mode.

An example of a preferred embodiment of the invention is to be described in the following with reference to the figures where
Fig 1 is a perspective view of a system for the manual shifting of gear
Fig 2 shows details of the system in fig 1.
Fig 3 shows detail of a valve included the system in fig 1 and 2.

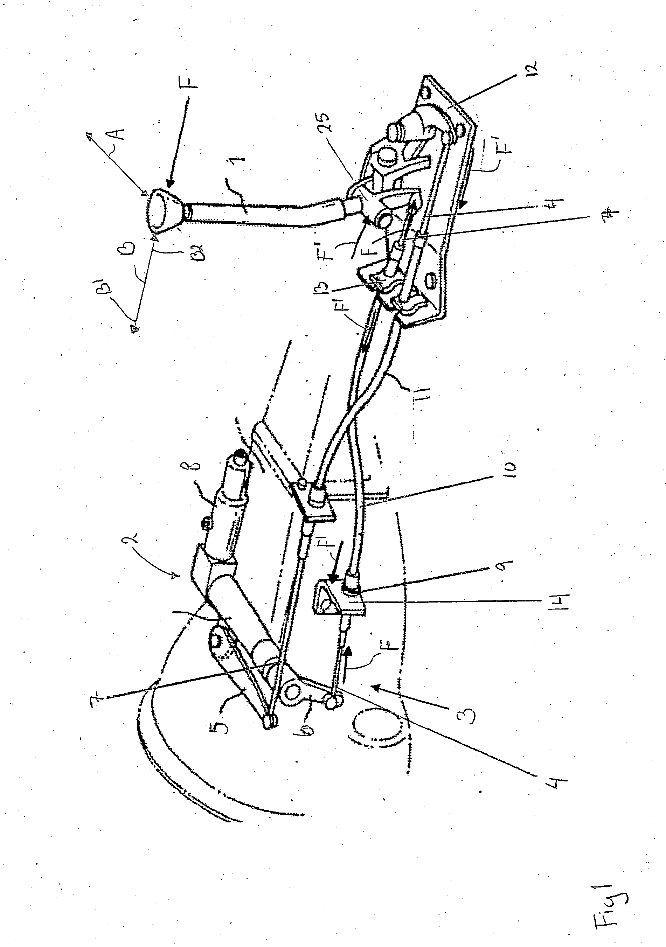

Fig 1 illustrates a system for shifting of gear ratio carried out by using a manual gear shift lever 1. The gear shift lever 1 is operated by the driver in two directions A and B as shown in figure 1. When moving the gear shift lever 1 in direction A, the gear shift lever 1 is moved in between the various shift gates performing a selecting movement. This selecting movement of the gear shift lever 1 is transferred to the shift mechanism 2 provided at the gear box 3 by the movement conducted by a cable 4. The movement of the cable 4 displaces a selecting lever 5 to a position making a connection to a shift fork (not shown) engaged in a set of gear train corresponding to the shift gate as chosen by the gear shift lever 1. Positioned into the selected shift gate the gear shift lever 1 is preferably placed in a position representing a neutral mode. From this position the gear shift lever 1 may be moved in a first direction (e.g. to make a downshift of gear) as illustrated by B1 to a position representing a specific gear ratio, or in a second direction (e.g. to make an upshift of gear) as illustrated by B2 to a position representing another specific gear ratio. The shifting movement of the gear shift lever 1 in the first or second direction is transferred to the shifting lever 6 of the shift mechanism 2 by the subsequent movement conducted by a cable 7. The movement of the cable 7 causes the displacement of the shifting lever 6, thereby moving the shift fork into engagement with a gear train corresponding to the specific gear ratio chosen by the gear shift lever 1.

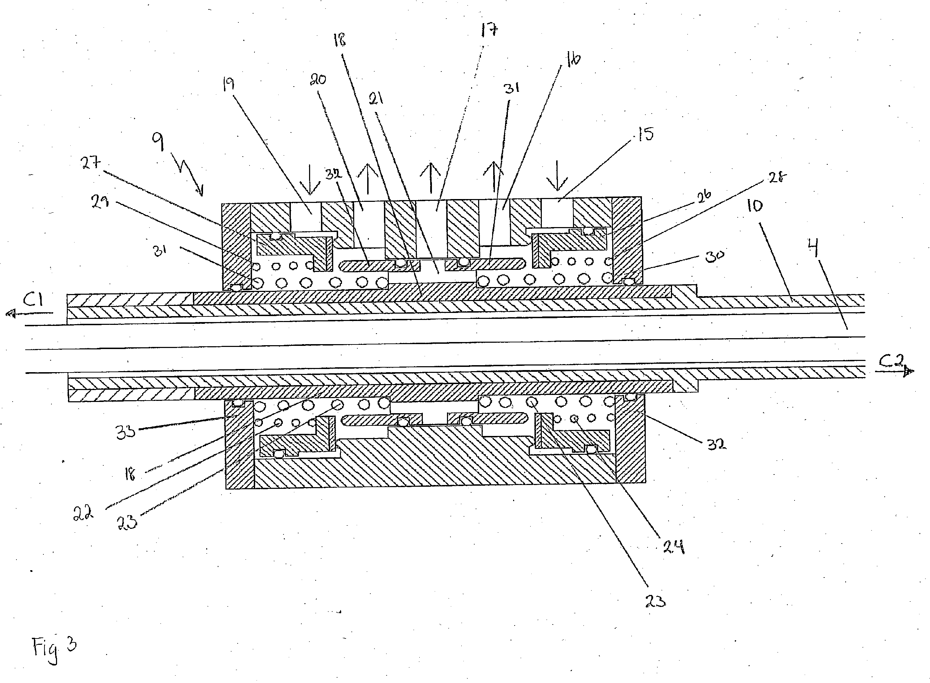

Each of the cables 4, 7 is provided with a cable cover 10, 11. The cable cover 10 is arranged loosely around the cable 7 as illustrated in fig 3. When operating the gear shift lever 1 performing a shifting operation for instance in the direction of arrow B1, a force F is exerted onto the upper end portion of the shift lever 1. Due to the rotatable connection 25 of the gear shift lever 1 and the attachment of the cable 7 at the lower portion of the gear shift lever 1, the force F acting on this lower portion of the shift lever 1 has an opposite direction of the force F acting on the upper portion of the shift lever 1. Thus, the cable 7 is moved in the opposite direction of the movement of the shift lever 1. The cable cover 10 is arranged separately around the cable 7 so that moving of the cable 7 does not cause movement of the cable cover 10.

However, the cable cover is affected by the force F acting on the shift lever 1, as the reactive force F' of the force F is transferred via the rotary connection 25 to the base 12 as illustrated by arrows in fig 1. The cable cover 10 is connected to the base 12 and to the gear box 3 by suitable fixing means 13, 14. The reactive force F' is transferred to the cable cover 10 via the fixing means 13 located at the base 12 and from the cable cover 10 to the fixing means 14 at the gear box. The reactive force F' causes a movement of the cable cover 10 directed in the opposite direction of the movement of the cable 7. The direction of the movement of the cable cover 10 is the same as the shifting direction of the gear shift lever 1 as executed by the driver.

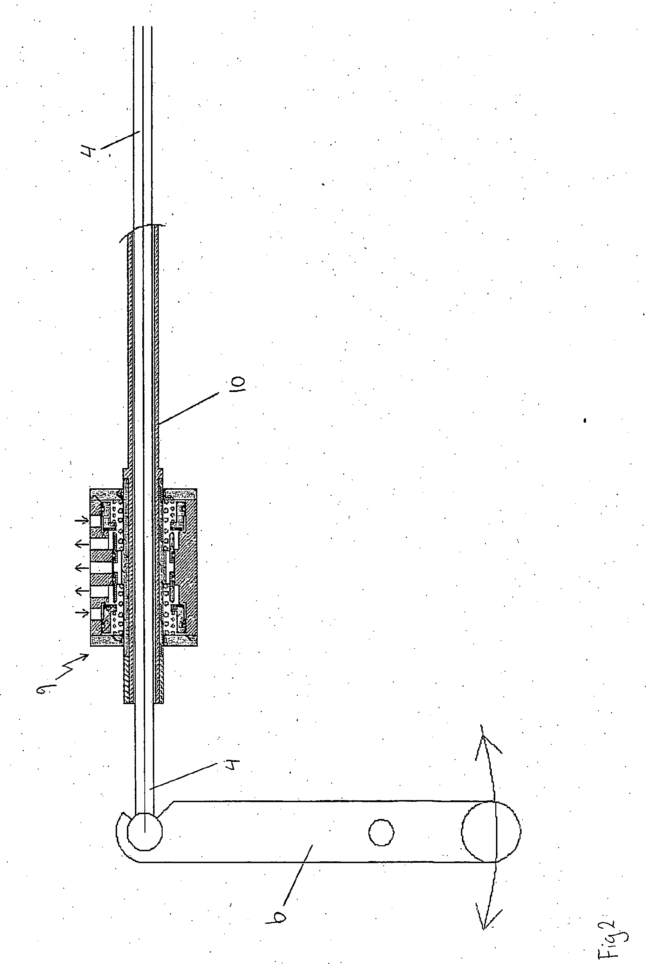

A power assistance mechanism 8 provides power to contribute to the shifting operation as requested by the driver operating the shift lever 1. To control the output of the power assistance mechanism 8 a valve 9 is provided as shown in fig 1. The valve 9 is shown in greater detail in fig 2 and 3.The valve is operated by the movements of the cable cover 10.

The valve 9 is controlling a cylinder (not shown) which is included in the power assistance mechanism 8. The cylinder comprises a cylinder chamber arranged with a movable piston provided with a piston rod, which piston divides the cylinder chamber into first and second cylinder chamber.

A valve controlling unit 18 is fixed to the cable cover 10. When a movement occurs in the cable cover 10 the valve controlling unit 18 is moved along with the movements of the cable cover 10. The valve controlling unit 18 is arranged in a passage of the valve 9. Parts of the controlling unit 18 is provided inside the valve and two separate springs are arranged in the interior of the valve between the controlling unit 18 and the end portions 32, 33 of the valve 9.

The valve is a provided with a first inlet 19 communicating with a fluid source (not shown) and a first outlet 20 able to communicate fluid from the fluid source to the first cylinder chamber. A first movable valve body 27 to close or open the first inlet is provided with a spring 28. Further the valve is provided with second inlet 15 and a second movable valve body 26 to close or open the second inlet 15, which second valve body 26 also is provided with a spring 29. The second inlet 15 is communicating with a fluid source and is able to communicate fluid from the fluid source to the second cylinder chamber. An exhaust outlet 17 is able to communicate with both cylinder chambers through outlets 16, 20.

In fig 2 and 3 no movements are induced in the cable cover 10 and the arrangement is in a position corresponding to the neutral mode of the gear box. In this current position the valve bodies 26, 27 close the inlets 15, 19 and the belonging springs 28, 29 are not compressed. The spring(s) 30, 31 keep the valve 9 centralized relative to the valve controlling unit 18. In this position, referred to as the third operation mode of the valve, the passage 21 provided in the valve controlling unit 18 is arranged for communication with exhaust outlet 17. In this position of the valve controlling unit 18, first and second cylinder chamber communicates with the exhaust outlet 17 through first and second outlets 20, 16.

When the gear shift lever 1 is operated in the first direction B 1 to shift to a new gear ratio, the cable cover 10 is moved in the first direction C1. The valve controlling unit 18 follows the movement of the cable cover 10 and is moved along in direction C1 compressing the spring 31. By this movement the first part 32 of the valve controlling unit 18 is moved into abutting contact with the first valve body 27 and displaces the first valve body 27 in direction C1, thereby compressing the spring 29. In this first operation mode of the valve 9, the valve controlling unit 18 is moved into a position wherein the first part 31 of the valve controlling unit 18 functions as a closure of the exhaust outlet 17, thus there is no communication between the passage 21 and the exhaust outlet 17. In this first operation mode the first valve body 27 is moved to a position opening the first inlet 19 for communication with the interior of the valve 9, thereby allowing pressurized fluid to enter the first chamber of the cylinder through first outlet 20 assisting the shift mechanism in carrying out the shifting of gear ratio.

When the gear shift lever 1 is operated in the second direction B2 to shift to a new gear ratio, the cable cover 10 is moved in the second direction C2. The sequences of this second operation mode of the valve 9 correspond to those of the first operation mode. The second valve body 26 is caused to open the second inlet 15 by the reposition of the valve controlling unit 18 in direction C2 and the compression of springs 28, 30. The exhaust outlet 17 is closed by the second part 32 of the valve controlling unit 18. Pressurized fluid is entering the interior of valve 9 through the second inlet 15 and is directed through the second outlet to the second chamber of the cylinder to assist the shifting of gear ratio.

If the driver requires neutral mode moving the gear shift lever from a position corresponding to a specific gear ratio, a movement of the cable cover in the direction of C1 or C2 occurs and the forces of the compressed springs urges the components of the valve to return to the position of the neural mode as displayed in figure 2 and 3.

The springs may be tuned to amend the force necessary for operating the gear shift lever to shift 1.

## Claims

1. A system for the shifting of gear ratio in a gear box of a vehicle, which system comprises
- a gear shift lever (1) which is moveable in at least one shift gate wherein one or plural positions each represents specific gear ratios or a neutral mode,
- at least one cable (4) arranged with a cable cover (10) fitted loosely around the cable, the movements of the cable transfer the information of the specific gear ratio as requested by the gear shift lever to a shifting mechanism (2) of the gear box,
- an assistance mechanism (8) providing a power contribution for the shifting mechanism (2) to carry out the shifting operation,
- a valve (9) for controlling the power assistance mechanism (8),
- the operation of the gear shift lever (1) causes the cable (4) to move in one direction and the cable cover (10) to move in the opposite direction, **characterized in that**
- the valve is operated by the movement of the cable cover (10).

2. A system in accordance with claim 1,
**characterized in that** the cable cover (10) controls the operating mode of the valve (9) by the movements or non-movement of the cable cover (10).

3. A system in accordance with claim 1 or 2,
**characterized in that** the valve is arranged with a valve controlling unit (18) to control the operating mode of the valve (9).

4. A system in accordance with claim 3,
**characterized in that** the valve controlling unit (18) is provided to move in accordance with the movements of the cable cover (10).

5. A system in accordance with one of the proceeding claims,
**characterized in that** a cylinder is included in the power assistance mechanism (8), which cylinder is constituted by a cylinder chamber arranged with movable piston provided with a piston rod, which piston divides the cylinder chamber into first and second cylinder chamber.

6. A system in accordance with one of the proceeding claims,
**characterized in that** the valve is provided with at least a first inlet (19) and preferably a second inlet (15) communicating with a fluid source, and at least a first outlet (20) and preferably a second outlet (16) able to communicate with first and second cylinder chamber respectively, and optionally the valve is provided with an exhaust outlet (17).

7. A system in accordance with claim 6,
**characterized in that** the valve (9) has
- a first operating mode wherein communication is provided through the first inlet (19), first outlet (20) and into the first chamber,
- a second operating mode wherein communication is provided through the second inlet (15), second outlet (16) and into the second chamber, and optionally
- a third operating mode wherein communication is provided between first and second chamber and the exhaust outlet (17).

8. A system in accordance with claim 6,
**characterized in that** the valve (9) is provided with a first movable valve body (27) to close or open the first inlet (19) and a second movable valve body (26) to close or open the second inlet (15).

9. A system in accordance with claim 6, when dependent on one of the claims 3-5, **characterized in that** the valve controlling unit (18) is movable relative to the inlets (19, 15) and outlets (20, 16) and /or the valve controlling unit (18) is movable to close or open the exhaust outlet (17), optionally the valve controlling unit is provided with a passage (21).

10. A system in accordance with claim 8 and claim 6, when dependent on one of the claims 3-5, **characterized in that** the movements of first and second movable valve body (27, 26) are controlled by the valve controlling unit (18).

11. A system in accordance with one of the proceeding claims 3-10, **characterized in that** the valve controlling unit (18) is supported by at least a spring in the interior of the valve (9), which spring establishes contact with the end portions (32, 33) of the valve (9).

12. A system in accordance with claim 8,
**characterized in that,**
each movable valve body (27, 28) is supported by at least one spring.

13. A system in accordance with one of the proceeding claims,
**characterized in that** the valve (9) is located at the end of the cable cover (10).

14. A system in accordance with one of the proceeding claims,
**characterized in that** the valve (9) is located in, on or close to the gear box.

15. A system in accordance with one of the proceeding claims, **characterized in that** the valve (9) constitutes a connecting unit for connecting the cable cover to the gear box.

16. A system in accordance with one of the proceeding claims, **characterized in that** the valve (9) is a poppet valve.

17. A system in accordance with one of the proceeding claims, **characterized in that** the valve (9) has a connection to the cable cover (10).

18. Method for operating a valve (9) which is included in a system for the shifting of a gear ratio, in a gear box of a vehicle, which shifting is assisted by a power assistance mechanism (8),
wherein the method comprises the steps:
- moving the gear shift lever (1) requesting another gear ratio, thereby causing
- a cable (4) to move in a first direction transferring the request for another gear ratio to a shifting mechanism (2) of the gear box, **characterized in that**
- a cable cover (10) which is fitted loosely around/onto the cable (4) to move in a direction opposite to the moving direction of the cable (4), the movement of the cable cover (10) is utilized for
- operating a valve (9) controlling the power assistance mechanism (8).

19. Method in accordance with claim 18,
**characterized in that** the method comprises the further step of transferring the movements of the cable cover (10) to the movable parts of the valve (9) by means of a valve controlling unit (18) fixed to the cable cover (10).

20. Method in accordance with one of the claims 18-19,
**characterized in that** a cylinder is included in the power assistance mechanism (8), which cylinder constitutes first and second cylinder chambers,
and the valve (9) is provided with at least a first inlet (19) and preferably a second inlet (15) communicating with a fluid source, and at least a first outlet (20) and preferably a second outlet (16) able to communicate with first and second cylinder chamber respectively, and optionally the valve is provided with an exhaust outlet (17).

21. Method in accordance with claim 20,
**characterized in that** the method comprises the steps of moving the gear shift lever (1) in a first direction in a shift gate into a position
representing a specific gear ratio, causing the cable cover (10) and the valve controlling, unit (18) to move in the same direction, thereby closing the exhaust outlet (17) and opening the first inlet (19) to provide for fluid to enter the first the cylinder chamber thereby providing power assistance to carry out the shifting operation of the shifting mechanism (2).

22. Method in accordance with claim 20,
**characterized in that** the method comprises the steps of moving the gear shift lever (1) in a second direction in the shift gate into a position representing a specific gear ratio, causing the cable cover (10) and the valve controlling unit (18) to move in the same direction, thereby closing the exhaust outlet (17) and opening the second inlet (15) to provide for fluid to enter the second cylinder chamber thereby providing power assistance to carry out the shifting operation of the shifting mechanism (2).

23. Method in accordance with claim 21 or 22,
**characterized in that** the method comprises the steps where the valve controlling unit (18) causes a first movable valve body (27) to move to open the first inlet (19) when the cable cover (10) moves in the first direction and the valve controlling unit valve (18) causes a second movable valve body (26) to move to open the second inlet (16) when the cable cover (10) moves in the second direction.

24. Method in accordance with one of the claims 23,
**characterized in that** the method comprises the steps of compressing a spring arranged between the valve controlling unit (18) and the end portions of the valve and compressing a spring supporting the first movable valve body (27) or second movabel valve body (26) when moving the cable cover (10) in the first direction or the second direction respectively.

25. Method in accordance with one of the claims 20 -24,
**characterized in that** the method comprises the steps of moving the gear shift lever (1) into a position representing a neutral mode, bringing the valve controlling unit (18) into a position closing the inlets (19, 15) and opening the exhaust outlet (17).

## Patentansprüche

1. System zum Wechseln des Übersetzungsverhältnisses eines Fahrzeuggetriebes, wobei das System aufweist:
- einen Gangschalthebel (1), der in wenigstens einer Schaltgasse beweglich ist, wobei eine oder mehrere Positionen jeweils spezifische Übersetzungsverhältnisse oder einen neutralen Modus repräsentieren,
- wenigstens einen Seilzug (4), der mit einer Seilzughülle (10) versehen ist, die locker über den Seilzug gezogen ist, wobei die Bewegungen des Seilzugs Informationen des spezifischen Übersetzungsverhältnisses, wie es von dem Gangschalthebel vorgegeben ist, zu einem Schaltmechanismus (2) des Getriebes übertragen,
- einen Unterstützungsmechanismus (8), der einen Kraftbeitrag für den Schaltmechanismus (2) liefert, um den Schaltvorgang auszuführen,
- ein Ventil (9) zum Steuern des Kraftunterstützungsmechanismus (8),
- wobei die Betätigung des Gangschalthebels (1) bewirkt, dass sich der Seilzug (4) in eine Richtung und die Seilzughülle (10) in die entgegengesetzte Richtung bewegen,
- **dadurch gekennzeichnet, dass**
- das Ventil durch die Bewegung der Seilzughülle (10) betätigt wird.

2. System nach Anspruch 1, **dadurch gekennzeichnet, dass** die Seilzughülle (10) den Betriebsmodus des Ventils (9) durch die Bewegungen oder Nicht-Bewegung der Seilzughülle (10) steuert.

3. System nach Anspruch 1 oder 2, **dadurch gekennzeichnet, dass** das Ventil mit einer Ventilsteuereinheit (18) versehen ist, um den Betriebsmodus des Ventils (9) zu steuern.

4. System nach Anspruch 3, **dadurch gekennzeichnet, dass** die Ventilsteuereinheit (18) dazu eingerichtet ist, sich gemäß den Bewegungen der Seilzughülle (10) zu bewegen.

5. System nach einem der vorhergehenden Ansprüche, **dadurch gekennzeichnet, dass** in dem Kraftunterstützungsmechanismus (8) ein Zylinder enthalten ist, wobei der Zylinder mit einer Zylinderkammer versehen mit einem beweglich Kolben, der mit einer Kolbenstange ausgestattet, gebildet ist, wobei der Kolben die Zylinderkammer in eine erste und eine zweite Zylinderkammer aufteilt.

6. System nach einem der vorhergehenden Ansprüche, **dadurch gekennzeichnet, dass** das Ventil mit einem ersten Einlass (19) und vorzugsweise einem zweiten Einlass (15), die mit einer Fluidquelle kommunizieren, und wenigstens einem ersten Auslass (20) und vorzugsweise einem zweiten Auslass (16) versehen ist, die in der Lage sind, mit der ersten beziehungsweise der zweiten Zylinderkammer zu kommunizieren, und dass das Ventil optional mit einem Ableitungsauslass (17) versehen ist.

7. System nach Anspruch 6, **dadurch gekennzeichnet, dass** das Ventil aufweist:
- einen ersten Betriebsmodus, in dem Kommunikation durch den ersten Einlass (19), den ersten Auslass (20) und in die erste Kammer ermöglicht ist,
- einen zweiten Betriebsmodus, in dem Kommunikation durch den zweiten Einlass (15), den zweiten Auslass (16) und in die zweite Kammer ermöglicht ist, und optional
- einen dritten Betriebsmodus, in dem Kommunikation zwischen der ersten und der zweiten Kammer und dem Ableitungsauslass (17) ermöglicht ist.

8. System nach Anspruch 6, **dadurch gekennzeichnet, dass** das Ventil (9) mit einem ersten beweglichen Ventilkörper (27) zum Schließen oder Öffnen des ersten Einlasses (19) und einem zweiten beweglichen Ventilkörper (26) zum Schließen oder Öffnen des zweiten Einlasses (15) versehen ist.

9. System nach Anspruch 6, wenn abhängig von einem der Ansprüche 3-5, **dadurch gekennzeichnet, dass** die Ventilsteuereinheit (18) beweglich relativ zu den Einlässen (19, 15) und Auslässen (20, 16) ist und/oder die Ventilsteuereinheit (18) beweglich ist, um den Ableitungsauslass (17) zu schließen oder zu öffnen, wobei die Ventilsteuereinheit optional mit einem Durchgang (21) versehen ist.

10. System nach Anspruch 8 und Anspruch 6, wenn abhängig von einem der Ansprüche 3 - 5, **dadurch gekennzeichnet, dass** Bewegungen der ersten und zweiten beweglichen Ventilkörper (27, 26) von der Ventilsteuereinheit (18) gesteuert werden.

11. System nach einem der vorhergehenden Ansprüche 3 - 10, **dadurch gekennzeichnet, dass** die Ventilsteuereinheit (18) von wenigstens einer Feder im Inneren des Ventils (9) unterstützt wird, wobei die Feder Kontakt mit den Endbereichen (32, 33) des Ventils (9) herstellt.

12. System nach Anspruch 8, **dadurch gekennzeichnet, dass** jeder bewegliche Ventilkörper (27, 28) von wenigstens einer Feder unterstützt ist.

13. System nach einem der vorhergehenden Ansprüche, **dadurch gekennzeichnet, dass** das Ventil (9) am Ende der Seilzughülle (10) angeordnet ist.

14. System nach einem der vorhergehenden Ansprüche, **dadurch gekennzeichnet, dass** das Ventil (9) an oder nahe an dem Getriebe angeordnet ist.

15. System nach einem der vorhergehenden Ansprüche, **dadurch gekennzeichnet, dass** das Ventil (9) eine Verbindungseinheit zum Verbinden der Seilzughülle mit dem Getriebe bildet.

16. System nach einem der vorhergehenden Ansprüche, **dadurch gekennzeichnet, dass** das Ventil (9) ein Tellerventil ist.

17. System nach einem der vorhergehenden Ansprüche, **dadurch gekennzeichnet, dass** das Ventil (9) eine Verbindung zu der Seilzughülle (10) hat.

18. Verfahren zum Betreiben eines Ventils (9), das in einem System zum Wechseln des Übersetzungsverhältnisses eines Fahrzeuggetriebes enthalten ist, wobei das Wechseln durch
einen Kraftunterstützungsmechanismus (8) unterstützt wird, wobei das Verfahren die Schritte aufweist:
- Bewegen des Gangschalthebels (1) zum Vorgeben eines anderen Übersetzungsverhältnisses, wodurch bewirkt wird, dass
- sich ein Seilzug (4) in eine erste Richtung bewegt, was die Anforderung für ein anderes Übersetzungsverhältnis zu einem Schaltmechanismus (2) des Getriebes überträgt,
**dadurch gekennzeichnet, dass**
- eine Seilzughülle (10), die locker um/über den Seilzug (4) gelegt ist, sich in eine Richtung entgegengesetzt zu der Bewegungsrichtung des Seilzuges (4) bewegt, wobei die Bewegung der Seilzughülle (10) dazu verwendet wird, um
- ein Ventil (9) zu betätigen, das den Kraftunterstützungsmechanismus (8) steuert.

19. Verfahren nach Anspruch 18, **dadurch gekennzeichnet, dass** das Verfahren den weiteren Schritt aufweist, die Bewegungen der Seilzughülle (10) auf die beweglichen Teile des Ventils (9) mittels einer Ventilsteuereinheit (18) zu übertragen, die an der Seilzughülle (10) befestigt ist.

20. Verfahren nach einem der Ansprüche 18 - 19, **dadurch gekennzeichnet, dass** in dem Kraftunterstützungsmechanismus (8) ein Zylinder enthalten ist, der erste und zweite Zylinderkammern bildet,
und dass das Ventil (9) wenigstens mit einem ersten Einlass (19) und vorzugsweise mit einem zweiten Einlass (15), die mit einer Fluidquelle kommunizieren, und wenigstens einem ersten Auslass (20) und vorzugsweise einem zweiten Auslass (16) versehen ist, die mit der ersten beziehungsweise der zweiten Zylinderkammer kommunizieren können, und dass das Ventil optional mit einem Ableitungsauslass (17) versehen ist.

21. Verfahren nach Anspruch 20, **dadurch gekennzeichnet, dass** das Verfahren die Schritte aufweist, den Gangschalthebel (1) in eine erste Richtung in einer Schaltgasse in eine Position zu bewegen, die ein spezifisches Übersetzungsverhältnis repräsentiert, was die Seilzughülle (10) und Ventilsteuereinheit (18) dazu veranlasst, sich in dieselbe Richtung zu bewegen, wodurch der Ableitungsauslass (17) geschlossen und der erste Einlass (19) geöffnet wird, um Fluid zum Eintritt in die erste Zylinderkammer zu liefern, wodurch Kraftunterstützung bereitgestellt wird, um den Schaltvorgang des Schaltmechanismus (2) auszuführen.

22. Verfahren nach Anspruch 20, **dadurch gekennzeichnet, dass** das Verfahren die Schritte aufweist, den Gangschalthebel (1) in eine zweite Richtung in der Schaltgasse in eine Position zu bewegen, die ein spezifisches Übersetzungsverhältnis repräsentiert, was die Seilzughülle (10) und die Ventilsteuereinheit (18) dazu zu veranlasst, sich in dieselbe Richtung zu bewegen, wodurch der Ableitungsauslass (17) geschlossen und der zweite Einlass (15) geöffnet wird, um Fluid zum Eintritt in die zweite Zylinderkammer zu liefern, wodurch Kraftunterstützung (2) bereitgestellt wird, um den Schaltvorgang des Schaltmechanismus auszuführen.

23. Verfahren nach Anspruch 21 oder 22, **dadurch gekennzeichnet, dass** das Verfahren weiter Schritte aufweist, bei denen die Ventilsteuereinheit (18) einen ersten beweglichen Ventilkörper (27) zur Bewegung veranlasst, um den ersten Einlass (19) zu öffnen, wenn sich die Seilzughülle (10) in die erste Richtung bewegt, und die Ventilsteuereinheit einen zweiten beweglichen Ventilkörper (26) zur Bewegung veranlasst, um den zweiten Einlass (16) zu öffnen, wenn sich die Seilzughülle (10) in die zweite Richtung bewegt.

24. Verfahren nach einem der Ansprüche 23, **dadurch gekennzeichnet, dass** das Verfahren die Schritte aufweist, eine zwischen der Ventilsteuereinheit (18) und den Endbereichen des Ventils angeordnete Feder zu komprimieren und eine den ersten beweglichen Ventilkörper (27) bzw. den zweiten beweglichen Ventilkörper (26) unterstützende Feder zu komprimieren, wenn die Seilzughülle (10) in die erste Richtung bzw. in die zweite Richtung bewegt wird.

25. Verfahren nach einem der Ansprüche 20 - 24, **dadurch gekennzeichnet, dass** das Verfahren die Schritte aufweist, den Gangschalthebel (1) in eine einen neutralen Modus repräsentierende Position zu bewegen, was die Ventilsteuereinheit (18) in eine die Einlässe (19, 15) verschließende und den Ableitungsauslass (17) öffnende Stellung bringt.

## Revendications

1. Système de changement de rapport d'un rapport d'engrenage dans une boîte de vitesses d'un véhicule, lequel le système comprend :
- un levier de changement de vitesse (1) qui est mobile selon au moins une grille de changement de rapport dans lequel une ou plusieurs positions représentent chacune des rapports d'engrenages spécifiques ou un mode neutre,
- au moins un câble (4) agencé avec une gaine de câble (10) ajustée librement autour du câble, les mouvements du câble transférant les informations du rapport d'engrenage spécifique tel que demandé par le levier de changement de vitesse au mécanisme de changement de rapport (2) de la boîte de vitesses,
- un mécanisme d'assistance (8) fournissant une contribution de puissance au mécanisme de changement de vitesse (2) pour l'exécution de l'opération de changement de vitesse,
- une soupape (9) destinée à commander le mécanisme d'assistance de puissance (8),
- la manipulation du levier de changement de vitesse (1) amenant le câble (4) à se déplacer dans un sens et la gaine de câble (10) à se déplacer dans le sens contraire, **caractérisé en ce que**
- la soupape est mise en oeuvre par le déplacement de la gaine de câble (10).

2. Système selon la revendication 1,
**caractérisé en ce que** la gaine de câble (10) commande le mode de fonctionnement de la soupape (9) par les déplacements ou l'immobilité de la gaine de câble (10).

3. Système selon la revendication 1 ou 2,
**caractérisé en ce que** la soupape est dotée d'une unité de commande (18) de soupape servant à commander le mode de fonctionnement de la soupape (9).

4. Système selon la revendication 3,
**caractérisé en ce que** l'unité de commande (18) de soupape est prévue pour se déplacer conformément au déplacement de la gaine de câble (10).

5. Système selon l'une quelconque des revendications précédentes,
**caractérisé en ce qu'**un cylindre est compris dans le mécanisme d'assistance de puissance (8), lequel cylindre est constitué d'une chambre de cylindre pourvue d'un piston mobile doté d'une tige de piston, lequel piston divise la chambre de cylindre en première et seconde chambres de cylindre.

6. Système selon l'une quelconque des revendications précédentes,
**caractérisé en ce que** la soupape est dotée d'au moins une première entrée (19) et, de préférence, d'une seconde entrée (15) communiquant avec une source de fluide et d'au moins une première sortie (20) et, de préférence, d'une seconde sortie (16) pouvant communiquer respectivement avec les première et seconde chambres de cylindre, et **en ce que** la soupape est éventuellement dotée d'une sortie de décompression (17).

7. Système selon la revendication 6,
**caractérisé en ce que** la soupape (9) a : i
- un premier mode de fonctionnement dans lequel une communication est établie par la première entrée (19), la première sortie (20) et dans la première chambre,
- un deuxième mode de fonctionnement dans lequel une communication est établie par la seconde entrée (15), la seconde sortie (16) et dans la seconde chambre et, éventuellement,
- un troisième mode de fonctionnement dans lequel une communication est établie entre les première et seconde chambres et la sortie de décompression (17).

8. Système selon la revendication 6,
**caractérisé en ce que** la soupape (9) est dotée d'un premier corps de soupape mobile (27) servant à fermer ou ouvrir la première entrée (19) et d'un second corps de soupape mobile (26) servant à fermer ou ouvrir la seconde entrée (15).

9. Système selon la revendication 6, lorsqu'elle dépend de l'une quelconque des revendications 3 à 5, **caractérisé en ce que** l'unité de commande (18) de soupape est mobile par rapport aux entrées (19, 15) et aux sorties (20, 16) et/ou l'unité de commande (18) de soupape est mobile dans le but de fermer ou d'ouvrir la sortie de décompression (17), l'unité de commande de soupape étant éventuellement dotée d'un passage (21).

10. Système selon la revendication 8 et la revendication 6, lorsqu'elles dépendent de l'une quelconque des revendications 3 à 5, **caractérisé en ce que** les déplacements des premier et second corps de soupape mobiles (27, 26) sont commandés par l'unité de commande (18) de soupape.

11. Système selon l'une quelconque des revendications précédentes 3 à 10,
**caractérisé en ce que** l'unité de commande (18) de soupape est supportée par au moins un ressort à l'intérieur de la soupape (9), lequel ressort établit un contact avec les parties d'extrémité (32, 33) de la soupape (9).

12. Système selon la revendication 8,
**caractérisé en ce que**,
chaque corps de soupape mobile (27, 28) est supporté par au moins un ressort.

13. Système selon l'une quelconque des revendications précédentes,
**caractérisé en ce que** la soupape (9) est située à l'extrémité de la gaine de câble (10).

14. Système selon l'une quelconque des revendications précédentes,
**caractérisé en ce que** la soupape (9) est située dans la boîte de vitesses, sur ou à proximité de celle-ci.

15. Système selon l'une quelconque des revendications précédentes,
**caractérisé en ce que** la soupape (9) constitue une unité de liaison destinée à lier la gaine de câble et la boîte de vitesses.

16. Système selon l'une quelconque des revendications précédentes,
**caractérisé en ce que** la soupape (9) est une soupape champignon.

17. Système selon l'une quelconque des revendications précédentes,
**caractérisé en ce que** la soupape (9) a une liaison avec la gaine de câble (10).

18. Procédé de mise en oeuvre d'une soupape (9) qui est comprise dans un système de changement de rapport d'un rapport d'engrenage dans une boîte de vitesse d'un véhicule, lequel le changement de rapport est assisté par un mécanisme d'assistance de puissance (8),
dans lequel le procédé comprend les étapes consistant :
- à déplacer un levier de changement de vitesse (1) en demandant un autre rapport d'engrenage, en amenant ainsi
- un câble (4) à se déplacer dans un premier sens en transférant la demande d'un autre rapport d'engrenage à un mécanisme de changement de rapport de la boîte de vitesses, **caractérisé en ce que**
- une gaine de câble (10) qui est ajustée librement autour du et/ou sur le câble (4) est amené à se déplacer dans un sens contraire au sens de déplacement du câble (4), le déplacement de la gaine de câble (10) étant utilisé pour
- mettre en oeuvre une soupape (9) commandant le mécanisme d'assistance de puissance (8).

19. Procédé selon la revendication 18,
**caractérisé en ce que** le procédé comprend l'étape supplémentaire de transfert des déplacements de la gaine de câble (10) aux parties mobiles de la soupape (9) au moyen d'une unité de commande (18) de soupape fixée à la gaine de câble (10).

20. Procédé selon l'une quelconque des revendications 18 et 19, **caractérisé en ce qu'**un cylindre est compris dans le mécanisme d'assistance de puissance (8), lequel cylindre constitue des première et seconde chambres de cylindre,
et la soupape (9) est pourvue d'au moins une première entrée (19) et, de préférence, d'une seconde entrée (15) communiquant avec une source de fluide et d'au moins une première sortie (20) et, de préférence, d'une seconde sortie (16) pouvant communiquer respectivement avec les première et seconde chambres de cylindre, et **en ce que** la soupape est éventuellement dotée d'une sortie de décompression (17).

21. Procédé selon la revendication 20,
**caractérisé en ce que** le procédé comprend les étapes consistant à déplacer le levier de changement de vitesse (1) dans un premier sens selon une grille de changement de rapport dans une position représentant un rapport d'engrenage spécifique, en amenant la gaine de câble (10) et l'unité de commande (18) de soupape à se déplacer dans le même sens, en fermant ainsi la sortie de décompression (17) et en ouvrant la première entrée (19) dans le but d'autoriser un fluide à pénétrer la première chambre de cylindre, en fournissant une assistance de puissance permettant d'exécuter l'opération de changement de rapport du mécanisme de changement de rapport (2).

22. Procédé, selon la revendication 20,
**caractérisé en ce que** le procédé comprend les étapes consistant à déplacer le levier de changement de vitesse (1) dans un second sens selon la grille de changement de rapport dans une position représentant un rapport d'engrenage spécifique, en amenant la gaine de câble (10) et l'unité de commande (18) de soupape à se déplacer dans le même sens, en fermant ainsi la sortie de décompression (17) et en ouvrant la seconde entrée (15) dans le but d'autoriser un fluide à pénétrer la seconde chambre de cylindre, en fournissant une assistance de puissance permettant d'exécuter l'opération de changement de rapport du mécanisme de changement de rapport (2).

23. Procédé selon la revendication 21 ou 22,
**caractérisé en ce que** le procédé comprend les étapes selon lesquelles l'unité de commande (18) de soupape amène un premier corps de soupape mobile (27) à se déplacer pour ouvrir la première entrée (19) lorsque la gaine de câble (10) se déplace dans le premier sens et l'unité de commande (18) de soupape amène un second corps de soupape mobile (26) à se déplacer pour ouvrir la seconde entrée (16) lorsque la gaine de câble (10) se déplace dans le second sens.

24. Procédé selon la revendication 23,
**caractérisé en ce que** le procédé comprend les étapes consistant à comprimer un ressort disposé entre l'unité de commande (18) de soupape et les parties d'extrémité de la soupape et à comprimer un ressort supportant le premier corps de soupape mobile (27) ou le second corps de soupape mobile (26) lors du déplacement de la gaine de câble (10) respectivement dans le premier sens ou le second sens.

25. Procédé selon l'une quelconque des revendications 20 à 24,
**caractérisé en ce que** le procédé comprend les étapes consistant à déplacer le levier de changement de vitesse (1) dans une position représentant un mode neutre, en amenant l'unité de commande (18) de soupape dans une position fermant les entrées (19, 15) et ouvrant la sortie de décompression (17).
